# EUROPEAN PATENT SPECIFICATION

(11) **EP 1 597 310 B1**
(45) Date of publication and mention of the grant of the patent: **18.06.2008**
(21) Application number: 04715203.8
(22) Date of filing: 27.02.2004
(51) Int. Cl.: C08K 5/3477, A23L 3/3427, B65D 81/26

(54) **ABSORBENT MATERIAL FOR USE IN HUMID CONDITIONS**
ABSORPTIONSMITTELMATERIAL ZUR VERWENDUNG UNTER FEUCHTEN BEDINGUNGEN
MATERIAU ABSORBANT UTILISABLE DANS DES CONDITIONS HUMIDES

(30) Priority: 27.02.2003 AU 2003900895
(43) Date of publication of application: 23.11.2005
(73) Proprietor: COMMONWEALTH SCIENTIFIC AND INDUSTRIAL RESEARCH ORGANISATION, Campbell, ACT 2601 (AU)
(72) Inventor: HORSHAM, Mark, Andrew, Mascot, NSW 2020 (AU); MURPHY, James, Keith, Gerard, Baulkham Hills, New South Wales 2153 (AU); SANTANGELO, Ross, Anthony, Concord, NSW 2137 (AU)
(74) Representative: Jappy, John William Graham
(86) International application number: PCT/AU2004/000251
(87) International publication number: WO 2004/076545

(56) References cited:
- WO-A-00/60942
- WO-A-91/04292
- WO-A-99/28354
- WO-A1-00/60942
- WO-A1-91/04292
- DE-C- 923 028
- PATENT ABSTRACTS OF JAPAN vol. 014, no. 423 (C-0757), 12 September 1990 (1990-09-12) -& JP 02 160705 A (SHIONOGI & CO LTD), 20 June 1990 (1990-06-20)
- DATABASE WPI Week 199031, Derwent Publications Ltd., London, GB; Class A97, AN 1990-234326, XP003003430 & JP 02 160 705 A (SHIONOGI KK) 20 June 1990

## Description

This invention relates to compositions, comprising a class of tetrazine compounds, for absorbing ethylene and other gaseous unsaturated compounds, which are suitable for use in humid conditions. In one application, the compositions of the invention may be used to retard the deterioration of, and extend the storage life of, fruit and other plant materials. In a second application, the compositions of the invention may be used to monitor the concentration of, or in indicating the presence of, ethylene.

### BACKGROUND OF THE INVENTION

The post-harvest life and quality of many fruits, vegetables and flowers is seriously shortened if they are exposed to trace amounts of the gas, ethylene. The levels of ethylene which can affect living plants are very low, for example, ethylene concentrations above 100ppb will seriously reduce the vase life of carnations and levels of that order are commonly present in city air from vehicle exhausts, cigarette smoke, refinery gases, fluorescent lights and from ripening of fruits such as apples.

Accordingly, by reducing exposure to ethylene there is an opportunity to improve the shelf life of such products. Unfortunately, most reagents known to be reactive with ethylene are either incompatible with foodstuffs or packaging materials (eg potassium permanganate) or react only slowly unless heated.

In Australian Patent No. 632167, the present applicants describe a novel absorbent material for absorbing ethylene and other unsaturated compounds, comprising electron-deficient dienes or trienes, such as benzenes, pyridines, diazines, triazines and tetrazines having electron-withdrawing substituents incorporated in an ethylene permeable substrate. In that patent, the present applicants disclose that tetrazines activated by groups such as fluorinated alkyl groups, sulfones and esters, are preferred, in particular, dicarboxyoctyl, dicarboxydecyl and dicarboxymethyl ester groups.

It has now been found by the present applicants that the system disclosed in Australian Patent No. 632167 suffers from one disadvantage that severely limits its practical use.

That is, the preferred tetrazine compounds disclosed in the patent, ie the tetrazine esters, are unstable in the presence of moisture, even when incorporated into a hydrophobic ethylene permeable substrate such as polystyrene, polyethylene and polypropylene. Hence the compositions of Australian Patent No. 632167, which comprise tetrazine esters, are unsuitable for use in the humid or moist conditions that commonly prevail during handling and storage of fruit and other plant materials.

### SUMMARY OF THE INVENTION

The present applicants have now identified a class of tetrazine compounds that react with ethylene at room temperature and are surprisingly more stable to the presence of moisture than tetrazine esters.

Accordingly, in a first aspect, the present invention provides a composition for absorbing gaseous unsaturated compounds, such as ethylene, comprising a tetrazine compound incorporated in a polymeric substrate, wherein the tetrazine compound is stable to the presence of moisture.

In a second aspect, the present invention provides a method of retarding the ripening or senescence of fruit or other plant material (eg cut flowers) comprising confining the fruit or plant material in an ambient atmosphere subject to the ethylene-absorbing action of a composition according to the first aspect.

In a third aspect, the present invention provides a method of removing a gaseous unsaturated compound from an environment, the method comprising providing a composition according to the first aspect in contact with said environment.

In a fourth aspect, the present invention provides a method for removing a gaseous unsaturated compound, such as ethylene, from an environment, the method comprising providing a package or container comprising a wall or walls comprising a composition according to the first aspect.

In a fifth aspect, the present invention provides a method for monitoring or measuring the concentration of, or indicating the presence of, ethylene in an environment (eg within a package or inside a bulk storage container such as a shipping container), wherein said method comprises providing a composition according to the first aspect in contact with said environment and detecting a change in the colour of said composition.

In a sixth aspect, the present invention provides a method for measuring the permeability of a substrate to a gaseous unsaturated compound (such as ethylene) comprising the use of a composition according to the first aspect.

### BRIEF DESCRIPTION OF THE FIGURES

Figure 1 shows the results of Example 1 in which the ethylene scavenging rates for compositions of the present invention are compared with the ethylene scavenging rate of a composition comprising a preferred tetrazine ester of Australian Patent No. 632167.
Figure 2 shows the results of Example 2 in which the moisture stability for compositions of the present invention are compared with the moisture stability of a preferred tetrazine ester of Australian Patent No. 632167.

### DETAILED DESCRIPTION OF THE INVENTION

In a first aspect, the present invention provides a composition for absorbing gaseous unsaturated compounds, such as ethylene, comprising a tetrazine compound incorporated in a polymeric substrate, wherein the tetrazine compound is stable to the presence of moisture.

Stability to the presence of moisture is herein defined to mean that the concentration of tetrazine compound, when incorporated into a film such as polystyrene, is depleted at a rate that is at most half that of tetrazine dicarboxymethyl ester for any particular combination of temperature, humidity and film thickness.

An example of an appropriate level of stability is that the concentration of tetrazine compound when incorporated into a polystyrene film of about 130 µm at a concentration of 0.2M is depleted by less than 20%, preferably less than 5%, when kept in conditions of 93% humidity and at a temperature of 25°C for 7 days.

The class of tetrazine compounds suitable for use in the present invention is represented by the following formula: 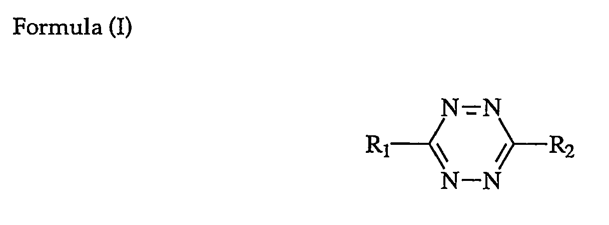 wherein R₁ and R₂ are independently selected from phenyl, 2-pyridyl, 3-pyridyl, 4-pyridyl and substituted derivatives thereof.

Preferably, the tetrazine compound is selected from the group consisting of 3,6-di(4-nitrophenyl)-1,2,4,5-tetrazine, 3,6-di(4-ethoxycarbonylphenyl)-1,2,4,5-tetrazine, 3,6-di(4-carboxyphenyl)-1,2,4,5-tetrazine, 3,6-di(2-pyridyl N-oxide)-1,2,4,5-tetrazine, 3,6-(4-methyl-2-pyridyl)-1,2,4,5-tetrazine and 3,6-di(1-ethyl-2-pyridinio bromide)-1,2,4,5-tetrazine).

In another preferred embodiment of the present invention, the tetrazine compound is selected from the group consisting of 3,6-diphenyl-1,2,4,5-tetrazine, 3,6-di(2-chlorophenyl)-1,2,4,5-tetrazine, 3,6-di(2-pyridyl)-1,2,4,5-tetrazine and 3,6-di(4-pyridyl)-1,2,4,5-tetrazine. The tetrazine compound 3,6-di(2-pyridyl)-1,2,4,5-tetrazine is particularly preferred.

The tetrazine compound may be incorporated into a polymeric substrate by methods such as chemical binding or simple solution or other suitable methods known to those skilled in the art. Appropriate concentrations for, say, a particular type of fruit or a particular environment may be determined by routine experiment.

A particularly advantageous feature of using polymeric substrates is that they may be cast as thin films suitable for wrapping and packaging, thereby allowing the presentation of large surface areas of absorbent to the ethylene-containing atmosphere. Alternatively, the polymeric substrate may be formed into coils or other high surface area shapes for inclusion with fruit and the like within a package such as an inert container.

Compositions employed in the method of the first aspect may be in a solid, semi-solid (eg a gel) or liquid form. They may therefore be applied as, or incorporated in, for example, inks, coatings, adhesives (eg polyurethanes), films, sheets or layers in containers such as trays or bottles either alone or as laminations or co-extrusions. When used in films or layers, they may be blended with typical polymers and / or copolymers used for construction of films or layers such as those approved for food contact. Such films or layers may be produced by extrusion at temperatures between 50°C and 350°C depending upon chemical composition and molecular weight distribution. It is also envisaged that the compositions of the first aspect may take the form of pads, spots, patches, sachets, labels, cards, discs, tablets, blocks, powders or granules which may be attached to packaging materials or located independently within a package such as an inert package.

Suitable polymeric substrates for use in the present invention include, but are not limited to, silicones, polycarbonates, polystyrenes, polyethylenes, polypropylenes and cellulose fibre-based materials (eg paper and cardboard).

In a second aspect, the present invention provides a method of retarding the ripening or senescence of fruit or other plant material (eg cut flowers) comprising confining the fruit or plant material in an ambient atmosphere subject to the ethylene-absorbing action of a composition according to the first aspect.

In a third aspect, the present invention provides a method of removing a gaseous unsaturated compound from an environment, the method comprising providing a composition according to the first aspect in contact with said environment.

It is envisaged, for example, that the compound may be used for removing ethylene from storerooms by recirculating storeroom air over the composition.

In addition to the compositions of the present invention being useful in reducing the level of ethylene and other gaseous unsaturated compounds in the immediate locale of their generation, it will be appreciated that, when used in the form of packaging films or as the walls of a container, they will serve to prevent ethylene entering or leaving a package. This may be useful when materials of differing ethylene-generating capacity or ethylene sensitivity are to be stored in close proximity.

Accordingly, in a fourth aspect, the present invention provides a method for removing a gaseous unsaturated compound, such as ethylene, from an environment, the method comprising providing a package or container comprising a wall or walls comprising a composition according to the first aspect.

Tetrazines are strongly coloured compounds. This colour disappears as the tetrazines are consumed by reaction with ethylene. Accordingly, the compositions of the present invention may be used for monitoring the concentration of, or indicating the presence of, ethylene.

Thus, in a fifth aspect, the present invention provides a method for monitoring or measuring the concentration of, or indicating the presence of, ethylene in an environment (eg within a package or inside a bulk storage container such as a shipping container), wherein said method comprises providing a composition according to the first aspect in contact with said environment and detecting a change in the colour of said composition.

In a preferred embodiment of the method of the fifth aspect, the composition is provided in the form of a packaging film or in some other packaging form (eg a layer in a container), and the composition may indicate ethylene being generated within or passing into the package, or may otherwise allow for the measuring of the concentration of ethylene within a package.

In another preferred embodiment of the method of the fifth aspect, the composition is provided in the form of a spot, patch, strip or card, and the composition may be used to monitor or measure the concentration of, or indicate the presence of, ethylene inside a container such as a bulk storage container for the transport of horticultural produce. For instance, spots of the composition may be placed around a bulk storage container so that the release of ethylene from within the container can be measured.

Compositions of the first aspect might also provide a means for measuring the permeability of other substrates to ethylene and similar compounds, using devices similar to those described in Australian Patent No. 548020 (the entire disclosure of which is hereby incorporated by reference) for measuring oxygen permeability.

The present invention therefore provides in a sixth aspect, a method for measuring the permeability of a substrate to a gaseous unsaturated compound (such as ethylene) comprising the use of a composition according to the first aspect.

The terms "comprise", "comprises" and "comprising" as used throughout the specification are intended to refer to the inclusion of a stated step, component or feature or group of steps, components or features with or without the inclusion of a further step, component or feature or group of steps, components or features.

Any discussion of documents, acts, materials, devices, articles or the like which has been included in the present specification is solely for the purpose of providing a context for the present invention. It is not to be taken as an admission that any or all of these matters form part of the prior art base or were common general knowledge in the field relevant to the present invention as it existed anywhere before the priority date of each claim of this application.

In order that the nature of the present invention may be more clearly understood, preferred forms thereof will now be described with reference to the following nonlimiting examples.

### EXAMPLES

The abbreviations used in Examples 1 and 2, refer to the following tetrazine compounds: 3,6-diphenyl-1,2,4,5-tetrazine (**4-DPhT**), 3,6-di(2-chlorophenyl)-1,2,4,5-tetrazine (**2-Cl-DPhT**), 3,6-di(2-pyridyl)-1,2,4,5-tetrazine (**2-DPT**), 3,6-di(4-pyridyl)-1,2,4,5-tetrazine (**4-DPT**) and dimethyl-1,2,4,5-tetrazine-3,6-dicarboxylate (**DMTD**). 4-DPhT, 2-Cl-DPhT, 2-DPT and 4-DPT are examples of the preferred tetrazine compounds for use in compositions of the present invention. DMTD is an example of a preferred tetrazine compound of Australian Patent No. 632167.

### Example 1: Comparison of rate of ethylene scavenging of tetrazine compounds in polystyrene

The depletion of the tetrazine compound, as measured by % absorbance change, was used to indicate ethylene scavenging rate of the tetrazine compounds.

Compositions were prepared by blending the tetrazine compounds at a concentration of 0.2M into polystyrene. Each composition was then compression moulded to form a film having a thickness of about 130 µm. Each film sample was then mounted in a cell holder and the maximum absorbance between 500-550nm measured. The cell holders containing the film samples were then placed on a mesh platform in a 550 mL squat glass jar fitted with a screw cap and polypropylene wad seal. Each jar was thoroughly flushed with 100% ethylene and stored at room temperature.

At two-hourly intervals, the film sample was removed from the jar, and the maximum absorbance between 500-550nm quickly measured before replacing the sample into the jar and charging with ethylene as previously described.

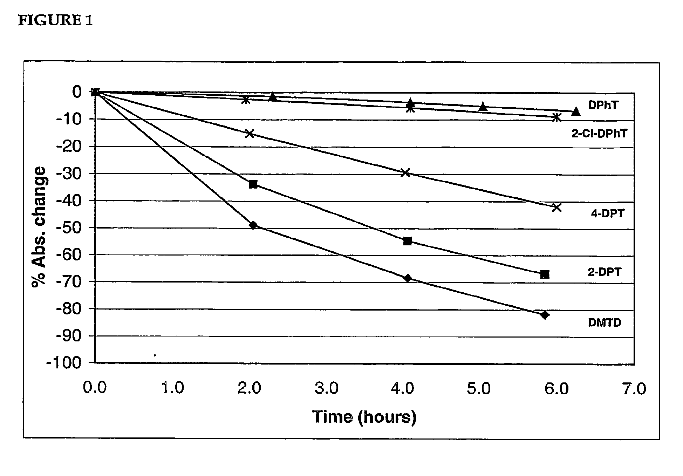

The results for each tetrazine compound are illustrated in Figure 1. The results indicate that each of the compositions of the present invention scavenge ethylene.

### Example 2: Comparison of sensitivity to moisture of tetrazine compounds in polystyrene

The depletion of the tetrazine compound, as measured by % absorbance change, was used to indicate the sensitivity to moisture of the tetrazine compounds.

Compositions were prepared by blending the tetrazine compounds at a concentration of 0.2M into polystyrene. Each composition was then compression moulded to form a film having a thickness of about 130 µm. Each film sample was then mounted in a cell holder and the maximum absorbance between 500-550nm measured. The cell holders containing the film samples were then placed on a mesh platform in a 550 mL squat glass jar fitted with a screw cap and polypropylene wad seal. To achieve a relative humidity of 93% at 25 °C, a saturated solution of potassium nitrate covered the bottom of the jars (approx. 10mm below the mesh platform). The jars were stored in a controlled-temperature room at 25 °C.

At intervals of several days for at least 42 days, samples were in turn removed from their jars, and the maximum absorbance recorded between 500-550 nm, before immediately returning them to the controlled-temperature room in their sealed jars.

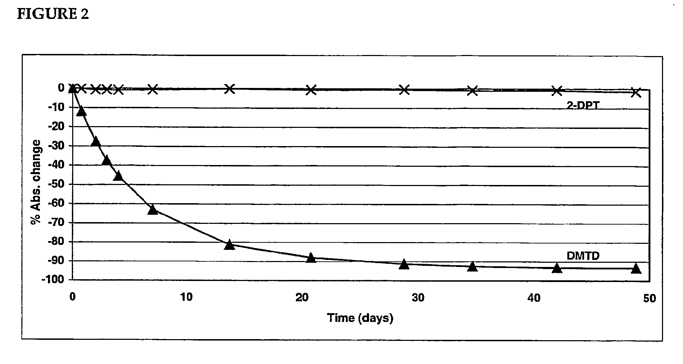

The results are illustrated graphically in Figure 2. It is apparent from these results that the tetrazine esters represented by DMTD are highly unstable to moisture even when incorporated in a hydrophobic polymeric substrate such as polystyrene. It is also apparent that the compounds of the particular class of tetrazine compounds identified by the applicants are within experimental error, completely stable under these conditions.

Note: For clarity, only the results for 2-DPT and DMTD are shown in Figure 2. The results for film samples containing 4-DPT, DPhT and 2-Cl-DPhT were as for 2-DPT.

It will be appreciated by persons skilled in the art that numerous variations and/or modifications may be made to the invention as shown in the specific embodiments without departing from the spirit or scope of the invention as broadly described. The present embodiments are, therefore, to be considered in all aspects as illustrative and not restrictive.

## Claims

1. A method of removing a gaseous unsaturated compound from an environment, the method comprising providing a composition comprising a tetrazine compound incorporated in a polymeric substrate, wherein the tetrazine compound is stable to the presence of moisture and is represented by the following formula: 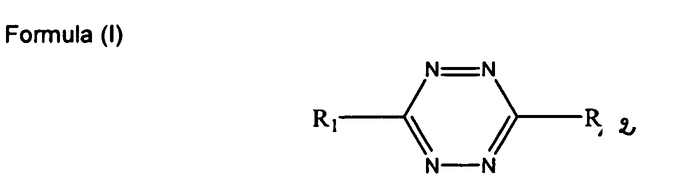 wherein R₁ and R₂ are independently selected from phenyl, 2-pyridyl, 3-pyridyl, 4-pyridyl and substituted derivatives thereof, in contact with said environment.

2. A method according to claim 1 wherein the tetrazine compound is selected from the group consisting of 3,6-di(4-nitrophenyl)-1,2,4,5-tetrazine, 3,6-di(4-ethoxycarbonylphenyl)-1,2,4,5-tetrazine, 3,6-di(4-carboxyphenyl)-1,2,4,5-tetrazine, 3,6-di(2-pyridyl N-oxide)-1,2,4,5-tetrazine, 3,6-(4-methyl-2-pyridyl)-1,2,4,5-tetrazine and 3,6-di(1-ethyl-2-pyridinio bromide)-1,2,4,5-tetrazine.

3. A method according to claim 1 wherein the tretrazine compound is selected from the group consisting of 3,6-diphenyl-1,2,4,5-tetrazine, 3,6-di(2-chlorophenyl)-1,2,4,5-tetrazine, 3,6-di(2-pyridyl)-1,2,4,5-tetrazine and 3,6-di(4-pyridyl)-1,2,4,5-tetrazine.

4. A method according to claim 3 wherein the tetrazine compound is 3,6-di(2-pyridyl)-1,2,4,5-tetrazine.

5. A method according to any one of claims 1 to 4 wherein the concentration of tetrazine compound when incorporated into a polystyrene film of about 130 µm at a concentration of 0.2M is depleted by less than 20% when kept in conditions of 93% humidity and at a temperature of 25°C for 7 days.

6. A method according to claim 5 wherein the concentration of tetrazine compound is depleted by less than 5%.

7. A method according to any one of claims 1 to 6 wherein the polymeric substrate is selected from the group consisting of silicones, polycarbonates, polystyrenes, polyethylenes, polypropylenes and cellulose fibre-based materials.

8. A method according to any one of claims 1 to 7 wherein the composition is in a form selected from the group consisting of a pad, spot, patch, sachet, label, card, disc, tablet, block, powder, granules, a thin film and a coil.

9. A method according to claim 8 wherein the composition is in the form of a packaging film.

10. A method according to claim 8 wherein the composition is in the form of a spot, patch, strip or card.

11. A method according to any one of claims 1 to 10 wherein fruit or other plant material is present in said environment, and removal of the gaseous unsaturated compound retards the ripening or senescence of the fruit or plant material.

12. A method according to any one of claims 1 to 10, wherein said environment is within a package or container comprising a wall or walls comprising the composition.

13. A method according to any one of claims 1 to 10, further comprising detecting a change in colour of said composition, to thereby monitor or measure the concentration of, or indicating the presence of, the gaseous unsaturated compound in the environment.

14. A method according to claim 13 wherein the environment is inside a bulk storage container for the transport of horticultural produce.

15. A method according to any one of claims 1 to 10 wherein removal of the compound, provides a measure of the permeability of a substrate to the gaseous unsaturated compound.

16. A method according to any one of claims 1 to 15 wherein the unsaturated gaseous compound is ethylene.

17. A composition for absorbing a gaseous unsaturated compound comprising a tetrazine compound incorporated in a polymeric substrate, wherein the tetrazine compound is stable to the presence of moisture and is represented by the following formula: 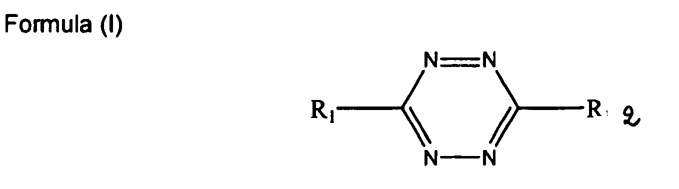 wherein R₁ and R₂ are independently selected from the group consisting of 3-pyridyl, 4-pyridyl and substituted derivatives thereof.

18. A composition for absorbing a gaseous unsaturated compound comprising a tetrazine compound incorporated in a polymeric substrate, wherein the tetrazine compound is stable to the presence of moisture and is selected from the group consisting of 3,6-di(4-nitrophenyl)-1,2,4,5-tetrazine, 3,6-di(2-pyridyl N-oxide)-1,2,4,5-tetrazine, 3,6-(4-methyl-2-pyridyl)-1,2,4,5-tetrazine and 3,6-di(1-ethyl-2-pyridinio bromide)-1,2,4,5-tetrazine.

19. A composition according to claim 17 or claim 18 wherein the concentration of tetrazine compound when incorporated into a polystyrene film of about 130 µm at a concentration of 0.2M is depleted by less than 20% when kept in conditions of 93% humidity and at a temperature of 25°C for 7 days.

20. A composition according to claim 19 wherein the concentration of tetrazine compound is depleted by less than 5%.

21. A composition according to any one of claims 17 to 20 wherein the polymeric substrate is selected from the group consisting of silicones, polycarbonates, polystyrenes, polypropylenes and cellulose fibre-based materials.

22. A composition according to any one of claims 17 to 21 wherein the composition is in a form selected from the group consisting of a pad, spot, patch, sachet, label, card, disc, tablet, block, powder, granules, a thin film and a coil.

23. A composition according to claim 22 wherein the composition is in the form of a packaging film.

24. A composition according to claim 22 wherein the composition is in the form of a spot, patch, strip or card.

25. A composition according to any one of claims 17 to 24 wherein the gaseous unsaturated compound is ethylene.

## Patentansprüche

1. Verfahren zum Entfernen einer gasförmigen ungesättigten Verbindung aus einer Umgebung, wobei das Verfahren die Bereitstellung einer in einem polymeren Substrat eingebauten Tetrazin-Verbindung in Kontakt mit der Umgebung umfasst, wobei die Tetrazin-Verbindung gegenüber Feuchtigkeit beständig ist und durch die folgende Formel dargestellt wird: 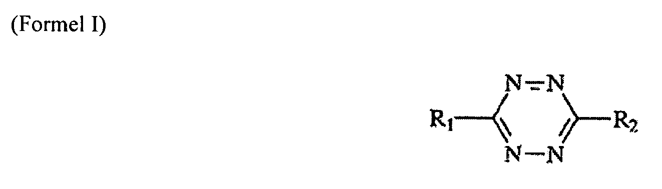 wobei R₁ und R₂ unabhängig von einander aus Phenyl, 2-Pyridyl, 3-Pyridyl, 4-Pyridyl und substituierten Derivaten davon ausgewählt sind.

2. Verfahren nach Anspruch 1, wobei die Tetrazin-Verbindung aus der Gruppe, bestehend aus 3,6-Di(4-nitrophenyl)-1,2,4,5-tetrazin, 3,6-Di(4-ethoxycarbonylphenyl)-1,2,4,5-tetrazin, 3,6-Di(4-carboxyphenyl)-1,2,4,5-tetrazin, 3,6-Di(2-pyridyl-N-oxid)-1,2,4,5-tetrazin, 3,6-(4-Methyl-2-pyridyl)-1,2,4,5-tetrazin und 3,6-Di(1-ethyl-2-pyridiniobromid)-1,2,4,5-tetrazin, ausgewählt ist.

3. Verfahren nach Anspruch 1, wobei die Tetrazin-Verbindung aus der Gruppe, bestehend aus 3,6-Diphenyl-1,2,4,5-tetrazin, 3,6-Di(2-chlorphenyl)-1,2,4,5-tetrazin, 3,6-Di(2-pyridyl)-1,2,4,5-tetrazin und 3,6-Di(4-pyridyl)-1,2,4,5-tetrazin, ausgewählt ist.

4. Verfahren nach Anspruch 3, wobei die Tetrazin-Verbindung 3,6-Di(2-pyridyl)-1,2,4,5-tetrazin ist.

5. Verfahren nach einem der Ansprüche 1 bis 4, wobei die Konzentration der Tetrazin-Verbindung, wenn sie in einer Polystyrolfolie von etwa 130 µm bei einer Konzentration von 0,2 M eingebaut wird, um weniger als 20 % abfällt, wenn sie unter Bedingungen von 93 % Feuchtigkeit und einer Temperatur von 25° C für sieben Tage gehalten wird.

6. Verfahren nach Anspruch 5, wobei die Konzentration der Tetrazin-Verbindung um weniger als 5 % abfällt.

7. Verfahren nach einem der Ansprüche 1 bis 6, wobei das polymere Substrat aus der Gruppe, bestehend aus Silikonen, Polycarbonaten, Polystyrolen, Polyethylenen, Polypropylenen und Materialien auf Zellulosefaser-Basis, ausgewählt ist.

8. Verfahren nach einem der Ansprüche 1 bis 7, wobei die Zusammensetzung in einer Form vorliegt, die aus der Gruppe, bestehend aus einem Ballen, Flecken, Flicken, Kissen, einer Markierung, einem Karton, einer Platte, Tablette, einem Klotz, Pulver, Granulat, Dünnfilm und einer Rolle, ausgewählt ist.

9. Verfahren nach Anspruch 8, wobei die Zusammensetzung in Form einer Verpackungsfolie vorliegt.

10. Verfahren nach Anspruch 8, wobei die Zusammensetzung in Form eines Fleckens, Flickens, Streifens oder einem Karton vorliegt.

11. Verfahren nach einem der Ansprüche 1 bis 10, wobei Frucht-. oder ein anderes Pflanzenmaterial in der Umgebung vorliegt, und die Entfernung der gasförmigen ungesättigten Verbindung die Reifung oder Seneszenz des Frucht- oder Pflanzenmaterials verzögert.

12. Verfahren nach einem der Ansprüche 1 bis 10, wobei die Umgebung in einer Verpackung oder einem Behälter vorliegt, die/der eine Wand oder Wände umfasst, welche die Zusammensetzung enthält/enthalten.

13. Verfahren nach einem der Ansprüche 1 bis 10, die weiter den Nachweis einer Farbveränderung der Zusammensetzung umfasst, um so die Konzentration der gasförmigen ungesättigten Verbindung in der Umgebung zu überwachen oder zu messen, oder deren Gegenwart anzuzeigen.

14. Verfahren nach Anspruch 13, wobei die Umgebung sich in einem Massenspeicherbehälter zum Transport von Gartenbauprodukten befindet.

15. Verfahren nach einem der Ansprüche 1 bis 10, wobei die Entfernung der Verbindung ein Maß für die Permeabilität eines Substrats für die gasförmige ungesättigte Verbindung bereitstellt.

16. Verfahren nach einem der Ansprüche 1 bis 15, wobei die ungesättigte gasförmige Verbindung Ethylen ist.

17. Zusammensetzung zur Absorption einer gasförmigen ungesättigten Verbindung, umfassend eine Tetrazin-Verbindung, die in einem polymeren Substrat eingebaut ist, wobei die Tetrazin-Verbindung gegenüber Feuchtigkeit stabil ist und durch die folgende Formel dargestellt wird: 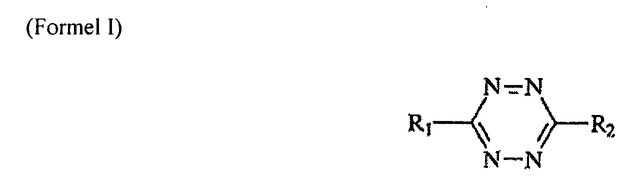 wobei R₁ und R₂ unabhängig von einander aus der Gruppe, bestehend aus 3-Pyridyl, 4-Pyridyl und substituierten Derivaten davon, ausgewählt sind.

18. Zusammensetzung zur Absorption einer gasförmigen ungesättigten Verbindung, umfassend eine in einem polymeren Substrat eingebaute Tetrazin-Verbindung, wobei die Tetrazin-Verbindung gegenüber Feuchtigkeit stabil ist und aus der Gruppe, bestehend aus 3,6-Di(4-nitrophenyl)-1,2,4,5-tetrazin, 3,6-Di(2-pyridyl-N-oxid)-1,2,4,5-tetrazin, 3,6-(4-Methyl-2-pyridyl)-1,2,4,5-tetrazin und 3,6-Di(1-ethyl-2-pyridiniobromid)-1,2,4,5-tetrazin, ausgewählt ist.

19. Zusammensetzung nach Anspruch 17 oder Anspruch 18, wobei die Konzentration der Tetrazin-Verbinung, wenn sie in eine Polysterolfolie von etwa 130 µm bei einer Konzentration von 0,2 M eingebaut ist, um weniger als 20 % abnimmt, wenn sie unter Bedingungen von 93 % Feuchtigkeit und einer Temperatur von 25° C für sieben Tage gehalten wird.

20. Zusammensetzung nach Anspruch 19, wobei die Konzentration der Tetrazin-Verbindung um weniger als 5 % abnimmt.

21. Zusammensetzung nach einem der Ansprüche 17 bis 20, wobei das polymere Substrat aus der Gruppe, bestehend aus Silikonen, Polycarbonaten, Polystyrolen, Polypropylenen und Materialien auf Zellulosefaser-Basis, ausgewählt ist.

22. Zusammensetzung nach einem der Ansprüche 17 bis 21, wobei die Zusammensetzung in einer Form vorliegt, die aus der Gruppe, bestehend aus einem Ballen, Flecken, Flicken, Kissen, einer Markierung, Karte, Platte, einem Klotz, Pulver, Granulat, Dünnfilm und einer Rolle, ausgewählt ist.

23. Zusammensetzung nach Anspruch 22, wobei die Zusammensetzung in Form einer Verpackungsfolie vorliegt.

24. Zusammensetzung nach Anspruch 22, wobei die Zusammensetzung in Form eines Fleckens, Flickens, Streifens oder einem Karton vorliegt.

25. Zusammensetzung nach einem der Ansprüche 17 bis 24, wobei die gasförmige ungesättigte Verbindung Ethylen ist.

## Revendications

1. Procédé d'élimination d'un composé insaturé gazeux d'un environnement, le procédé comprenant la formation d'une composition comprenant un composé de tétrazine incorporé dans un substrat polymère, dans lequel le composé de tétrazine est stable en présence d'humidité et est représenté par la formule suivante : 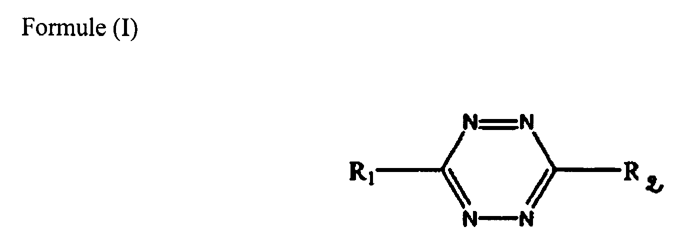 où R₁ et R₂ sont choisis indépendamment parmi le phényle, le 2-pyridyle, le 3-pyridyle, le 4-pyridyle et des dérivés substitués de ceux-ci, en contact avec ledit environnement.

2. Procédé selon la revendication 1, dans lequel le composé de tétrazine est choisi dans le groupe constitué par la 3,6-di(4-nitrophényl)-1,2,4,5-tétrazine, la 3,6-di(4-éthoxycarbonylphényl)-1,2,4,5-tétrazine, la 3,6-di(4-carboxyphényl)-1,2,4,5-tétrazine, la 3,6-di(2-pyridyl N-oxyde)-1,2,4,5-tétrazine, la 3,6-(4-méthyl-2-pyridyl)-1,2,4,5-tétrazine et la 3,6-di(1-éthyl-2-pyridinio bromure)-1,2,4,5-tétrazine.

3. Procédé selon la revendication 1, dans lequel le composé de tétrazine est choisi dans le groupe constitué par la 3,6-diphényl-1,2,4,5-tétrazine, la 3,6-di(2-chlorophényl)-1,2,4,5-tétrazine, la 3,6-di(2-pyridyl)-1,2,4,5-tétrazine et la 3,6-di(4-pyridyl)-1,2,4,5-tétrazine.

4. Procédé selon la revendication 3, dans lequel le composé de tétrazine est la 3,6-di(2-pyridyl)-1,2,4,5-tétrazine.

5. Procédé selon l'une quelconque des revendications 1 à 4, dans lequel la concentration du composé de tétrazine, lorsqu'il est incorporé dans un film en poly(styrène) d'environ 130 µm à une concentration de 0,2 M est diminuée de moins de 20 % lorsqu'il est maintenu dans des conditions de 93 % d'humidité et à une température de 25 °C pendant 7 jours.

6. Procédé selon la revendication 5, dans lequel la concentration du composé de tétrazine est diminuée de moins de 5 %.

7. Procédé selon l'une quelconque des revendications 1 à 6, dans lequel le substrat polymère est choisi dans le groupe constitué par les silicones, les poly(carbonates), les poly(styrènes), les poly(éthylènes), les poly(propylènes) et les matériaux à base de fibre de cellulose.

8. Procédé selon l'une quelconque des revendications 1 à 7, dans lequel la composition se présente sous une forme choisie dans le groupe constitué par un tampon, un point, un timbre, un sachet, une vignette, une carte, un disque, un comprimé, un bloc, une poudre, des granules, un film mince et une bobine.

9. Procédé selon la revendication 8, dans lequel la composition se présente sous la forme d'un film d'emballage.

10. Procédé selon la revendication 8, dans lequel la composition se présente sous la forme d'un point, d'un timbre, d'une bande ou d'une carte.

11. Procédé selon l'une quelconque des revendications 1 à 10, dans lequel un fruit ou un autre matériau végétal est présent dans ledit environnement et le retrait du composé insaturé gazeux retarde la maturation ou la sénescence du fruit ou du matériau végétal.

12. Procédé selon l'une quelconque des revendications 1 à 10, dans lequel ledit environnement se trouve dans un emballage ou un récipient comprenant une paroi ou des parois comprenant la composition.

13. Procédé selon l'une quelconque des revendications 1 à 10, comprenant en outre la détection d'un changement de couleur de ladite composition, pour ainsi surveiller ou mesurer la concentration ou indiquer la présence du composé insaturé gazeux dans l'environnement.

14. Procédé selon la revendication 13, dans lequel l'environnement se trouve à l'intérieur d'un récipient de stockage en vrac pour le transport de produits horticoles.

15. Procédé selon l'une quelconque des revendications 1 à 10, dans lequel l'élimination du composé fournit une mesure de la perméabilité d'un substrat au composé insaturé gazeux.

16. Procédé selon l'une quelconque des revendications 1 à 15, dans lequel le composé gazeux insaturé est l'éthylène.

17. Composition pour l'absorption d'un composé insaturé gazeux comprenant un composé de tétrazine incorporé dans un substrat polymère, dans laquelle le composé de tétrazine est stable en présence d'humidité et est représenté par la formule suivante : 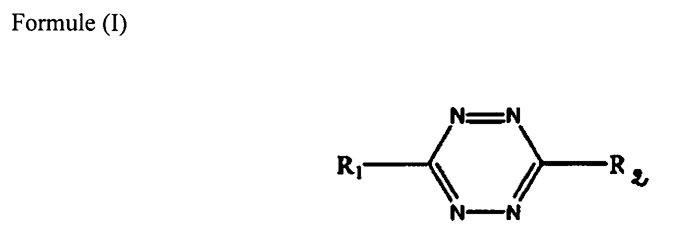 où R₁ et R₂ sont choisis indépendamment dans le groupe constitué par le 3-pyridyle, le 4-pyridyle et des dérivés substitués de ceux-ci.

18. Composition pour l'absorption d'un composé insaturé gazeux comprenant un composé de tétrazine incorporé dans un substrat polymère, dans laquelle le composé de tétrazine est stable en présence d'humidité et est choisi dans le groupe constitué par la 3,6-di(4-nitrophényl)-1,2,4,5-tétrazine, la 3,6-di(2-pyridyl N-oxyde)-1,2,4,5-tétrazine, la 3,6-(4-méthyl-2-pyridyl)-1,2,4,5-tétrazine et la 3,6-di(1-éthyl-2-pyridinio bromure)-1,2,4,5-tétrazine.

19. Composition selon la revendication 17 ou la revendication 18, dans laquelle la concentration du composé de tétrazine, lorsqu'il est incorporé dans un film en poly(styrène) d'environ 130 µm à une concentration de 0,2 M est diminuée de moins de 20 % lorsqu'il est maintenu dans des conditions de 93 % d'humidité et à une température de 25 °C pendant 7 jours.

20. Composition selon la revendication 19, dans laquelle la concentration du composé de tétrazine est diminuée de moins de 5 %.

21. Composition selon l'une quelconque des revendications 17 à 20, dans laquelle le substrat polymère est choisi dans le groupe constitué par les silicones, les poly(carbonates), les poly(styrènes), les poly(propylènes) et les matériaux à base de fibre de cellulose.

22. Composition selon l'une quelconque des revendications 17 à 21, dans laquelle la composition se présente sous une forme choisie dans le groupe constitué par un tampon, un point, un timbre, un sachet, une vignette, une carte, un disque, un comprimé, un bloc, une poudre, des granules, un film mince et une bobine.

23. Composition selon la revendication 22, dans laquelle la composition se présente sous la forme d'un film d'emballage.

24. Composition selon la revendication 22, dans laquelle la composition se présente sous la forme d'un point, d'un timbre, d'une bande ou d'une carte.

25. Composition selon l'une quelconque des revendications 17 à 24, dans laquelle le composé insaturé gazeux est l'éthylène.
